# NEW EUROPEAN PATENT SPECIFICATION

(11) **EP 0 780 425 B2**
(45) Date of publication and mention of the opposition decision: **17.01.2018**
(45) Mention of the grant of the patent: 18.02.2009
(21) Application number: 96309143.4
(22) Date of filing: 13.12.1996
(51) Int. Cl.: C08K 3/22, C01F 5/14

(54) **Heat deterioration resistant flame retardant, resin composition and molded articles**
Gegen Wärmezerstörung beständiges Flammenschutzmittel, Harzzusammensetzung und geformte Gegenstände
Ignifugeant avec bonne résistance à la détérioration par la chaleur, composition de résine et articles moulés

(30) Priority: 19.12.1995 JP 33044895
(43) Date of publication of application: 25.06.1997
(60) Divisional application: 07012393.0
(73) Proprietor: KYOWA CHEMICAL INDUSTRY CO., LTD., Takamatsu-shi, Kagawa 761-01 (JP)
(72) Inventor: Katsuki, Keiko, Kyowa Chemical Industry Co. Ltd., Sakaide-shi, Kagawa 762 (JP); Yoshii, Makoto, Kyowa Chemical Industry Co. Ltd., Sakaide-shi, Kagawa 762 (JP)
(74) Representative: J A Kemp

(56) References cited:
- EP-A- 0 370 728
- EP-A- 0 384 603
- WO-A1-95/19935
- GB-A- 1 514 081
- US-A- 4 698 379
- US-A- 5 034 442
- US-A- 5 286 258
- Kirschbaum et al., "Aluminium hydroxide and magnesium hydroxide. New developments and their applications in polymer compounding", Regional Technical Conference "The marketing of polymer modifiers and additives", September 23-25, 1991, pg. 89-98
- R. Rothon, Particulate Filled Polymer Composites, page 5, para 1.2.2.5
- MIYATA S. ET AL: 'Fire-Retarding polypropylene with magnesium hydroxide' JOURNAL OF APPLIED POLYMER SCIENCE vol. 25, 1980, pages 415 - 419

## Description

### Detailed Description of the Invention

This invention relates to a heat deterioration resistant flame retardant composed of magnesium hydroxide particles having specific properties and to a synthetic resin composition having heat deterioration resistance and flame retardancy which comprises the same in a predetermined proportion. More specifically, it relates to a flame retardant composed of magnesium hydroxide particles having specific properties, which rarely deteriorates by heat during the thermal molding of a synthetic resin and which can provide the resin with excellent heat deterioration resistance and flame retardancy and to a resin composition comprising the same in a predetermined proportion.

Further more specifically, it relates to a resin composition and a molded article comprising a relatively large amount of magnesium hydroxide particles as a flame retardant, which rarely deteriorate in physical strength by the heat degradation of the resin during molding or use and which hardly causes whitening due to the heat decomposition of the resin.

A requirement for flame retardant of synthetic resins is increasing and becoming exacting yearly. To meet such a requirement, a flame retardant comprising both an organic halide and antimony trioxide has been proposed and widely used. However, this flame retardant partially decomposes during molding and generates a halogen gas. Therefore, it involves various problems that it corrodes processing and molding machines, is harmful to workers, has an adverse effect on the heat resistance or weatherability of a resin and rubber, and generates a large amount of smoke containing a toxic gas when waste molded articles are burnt.

Therefore, a demand for a non-halogen flame retardant involving none of the above problems has been increasing and much attention is being paid to aluminum hydroxide particles or magnesium hydroxide particles, for example.

However, since aluminum hydroxide starts dehydration at a temperature of about 190°C and causes a foaming trouble in its molding, its molding temperature must be maintained at less than 190°C. Consequently, it has such a problem that kinds of resins to which it can be applied are limited.

On the other hand, since magnesium hydroxide particles start dehydration at about 340°C, it has such an advantage that it can be applied to almost all kinds of resins.

EP 0 370 728 is concerned with a high-dispersability magnesium oxide which has a particular specific surface area and particle size. Such a material is said to be active and highly dispersable and to act as an ideal thickening agent.

EP 0 384 603 relates to a process for the production of a magnesium oxide which involves reacting a water-soluble magnesium salt with an alkaline substance, followed by heating, particle formation, firing and pulverization. The resultant material is said to be useful for a number of applications which include as a heat resistance material, as an electrically insulating material and also for improving the thermal conductivity of a resin.

The Marketing of Polymer Modifiers and Additives, 1991, 89-98 is concerned with the developments in the study of aluminium hydroxide and magnesium hydroxide and their application in polymer compounding. This document describes how surface treatment of aluminium hydroxide can result in improved dispersion and adhesion between the flame retardant filler and a polymer matrix. With regard to magnesium hydroxide, a comparison is made between traditional magnesium hydroxides and an ultrapure magnesium hydroxide. A study is also described of magnesium hydroxides in polypropylene in which the surface of the magnesium hydroxide has been modified.

Further Laid-open Japanese Patent Application No. 115799/1977 (publication JP 52115799) teaches that a satisfactory molded article can be obtained by the development of a new method for synthesizing magnesium hydroxide particles having high crystallization.

That is, the above publication proposes magnesium hydroxide particles having specific properties, which experience a smaller structural distortion and less secondary agglomeration of particles and contain less residual water molecules and air than the conventional magnesium hydroxide particles. This publication also teaches that the magnesium hydroxide particles have good affinity with a resin such as polyolefin and produces no silver streak during molding, and a molded article having good appearance can be obtained therefrom, and that a polypropylene resin molded article having flame-retardancy which satisfies V-O in UL Standard 94 VE can be obtained.

However, although the magnesium hydroxide particles have appropriate properties as a flame-retardant molded article when filled in a resin, it has been found that they have still problems to be solved along with a recent increasing demand for properties.

That is, in order to meet V-O of UL-94 Flame Retardancy Standards with a 1/8-inch to 1/16-inch (3.175 to 1.5875 mm) thick product obtained by compounding magnesium hydroxide particles with a synthetic resin, the magnesium hydroxide particles must be comprised in an amount of about 150 to 250 parts by weight based on 100 parts by weight of the resin. The compounding of such a relatively large amount of the magnesium hydroxide particles promotes the deterioration of a molded article by heat during molding or use and reduces the physical properties of the molded article, particularly Izod impact strength, elongation, tensile strength and the like.

An object of the present invention is, therefore, to solve the above problems and is to provide a new flame retardant composed of magnesium hydroxide particles and having excellent heat deterioration resistance and a resin composition comprising the same, which has heat deterioration resistance and flame retardancy.

To attain the above object, the inventors of the present invention have conducted extensive studies on the purity and physical properties of magnesium hydroxide particles. As a result, it has been found that both the total amount of particular metal compounds as impurities contained in the magnesium hydroxide particles and the values of average secondary particle diameter and specific surface area have an influence on the heat deterioration of a resin and that a flame retardant having excellent heat deterioration resistance can be obtained by controlling these at specific values. The present invention has been accomplished upon this finding.

Various impurities are contained mainly in the starting materials of the magnesium hydroxide particles in their production process and mixed in the magnesium hydroxide particles as a solid solution or impurities. According to studies conducted by the inventors, it has been discovered that, when trace amounts of an iron compound and a manganese compound are present, they affect the heat deterioration of a resin even when they are contained as a solid solution or an admixture.

Thus, studies conducted by the inventors have revealed that when high-purity magnesium hydroxide particles contain less than a predetermined total amount of an iron compound, manganese compound, cobalt compound, chromium compound, copper compound, vanadium compound and nickel compound as impurities and have an average secondary particle diameter of 0.4 to 10 µm (this means that most particles are primary particles which do not undergo secondary agglomeration) and a specific surface area of 1 to 10 m²/g, a resin composition and a molded article which rarely deteriorate in physical properties by heat can be obtained.

According to the present invention, the above object of the present invention can be attained by a flame retardant having heat deterioration resistance, which is composed of magnesium hydroxide particles having (i) an average secondary particle diameter, measured by a laser diffraction scattering method, of 0.4 to 10 µm, (ii) a specific surface area, measured by a BET method, of 1 to 10 m²/g and containing (iii) a total amount of an iron compound, manganese compound, cobalt compound, chromium compound, copper compound, vanadium compound and nickel compound of not more than 0.01 % by weight in terms of metals.

The present invention thus provides a synthetic resin composition having heat deterioration resistance and flame retardancy, comprising:
(a) a synthetic resin; and
(b) magnesium hydroxide particles in a proportion of 15 to 80% by weight based on the total weight of (a) and (b),
wherein the magnesium hydroxide particles have
(i) an average secondary particle diameter, measured by a laser diffraction scattering method, of 0.4 to 10 µm,
(ii) a specific surface area, measured by a BET method, of 1 to 10 m²/g and containing
(iii) a total amount of iron compound, manganese compound, cobalt compound, chromium compound, copper compound, vanadium compound and nickel compound of not more than 0.01% by weight in terms of metals.

Also provided is a molded article formed from such a synthetic resin composition.

The present invention is described in detail hereinbelow.

The magnesium hydroxide particles in the present invention have an average secondary particle diameter, measured by a laser diffraction scattering method, of 0.4 to 1.0 µm and are rarely or slightly subjected to secondary agglomeration. The magnesium hydroxide particles have a specific surface area, measured by a BET method, of 1 to 10 m²/g. Further, the magnesium hydroxide particles of the present invention contain an iron compound, manganese compound, cobalt compound, chromium compound, copper compound, vanadium compound and nickel compound as impurities in a total amount of not more than 0.01 % by weight, in terms of metals.

The magnesium hydroxide particles have a total content of metals (Fe + Mn + Co + Cr + Cu + V + Ni) of not more than 0.01 % by weight.

As the total content of an iron compound, manganese compound, cobalt compound, chromium compound, copper compound, vanadium compound and nickel compound in the magnesium hydroxide particles increases, the thermal stability of a resin compounded with the particles becomes greatly deteriorated. However, even when the total content of the iron compound, manganese compound, cobalt compound, chromium compound, copper compound, vanadium compound and nickel compound is in the above range, the resin comprising such magnesium hydroxide particles cannot attain excellent thermal stability and be prevented deterioration in physical properties. In addition to the above, it is necessary that the above average secondary particle diameter and specific surface area satisfy the above respective ranges as well. As the average secondary particle diameter increases, the contact area between the particles and the resin decreases and thermal stability is improved. Instead, such problems occur as deterioration in mechanical strength and poor outer appearance.

As described above, when the magnesium hydroxide particles have (i) an average secondary particle diameter, (ii) a specific surface area and (iii) the total content of an iron compound, manganese compound, cobalt compound, chromium compound, copper compound, vanadium compound and nickel compound within the above respective ranges, a resin composition which satisfies such properties as compatibility with a resin, dispersibility, moldability, workability, outer appearance of a molded article thereof, mechanical strength and flame retardancy can be obtained.

A method for producing the magnesium hydroxide particles in the present invention is not particularly limited as far as they satisfy the above requirements (i), (ii) and (iii). The magnesium hydroxide particles that satisfy requirements for (i) average secondary particle diameter and (ii) specific surface area can be produced by employing a method and conditions described in Laid-open Japanese Patent Application No. 115799/1977 (publication no. JP 52115799), for example. That is, the magnesium hydroxide particles can be produced by heating magnesium chloride or magnesium nitrate and an alkali substance such as alkali metal hydroxide, ammonium or magnesium oxide as starting materials in an aqueous medium under a pressurized condition (preferably 5 to 30 kg/cm²). In the above production, by selecting starting materials containing no impurities or trace amounts of impurities, especially an iron compound, manganese compound, cobalt compound, chromium compound, copper compound, vanadium compound and nickel compound, magnesium hydroxide particles satisfying the above requirement (iii) can be obtained.

If necessary, it is preferred that the magnesium chloride or magnesium nitrate and the alkali substance as starting materials be purified to reduce contents of an iron compound and a manganese compound therein.

Although the magnesium hydroxide particles of the present invention may be filled in a resin directly as a flame retardant having heat deterioration resistance, they may be used after treated with a surface treating agent. The surface treating agent is at least one selected from the group consisting of higher fatty acids, anionic surfactants, phosphoric esters, silane coupling agents, titanate coupling agents, aluminum coupling agents, and esters of polyhydric alcohols and fatty acids. Preferably, the magnesium hydroxide particles have been treated with at least are surface treating agent which is a higher fatty acid, anionic surfactant, phosphonic acid ester, coupling agent or ester of a polyhydric alcohol and a fatty acid.

Preferred examples of the surface treating agent include higher fatty acids having 10 or more carbon atoms such as stearic acid, erucic acid, palmitic acid, lauric acid and behenic acid; alkali metal salts of the above higher fatty acids; sulfuric acid ester salts of higher alcohols such as stearyl alcohol and oleyl alcohol; anionic surfactants such as sulfuric ester salts, amide-bonded sulfuric acid ester salts, ester-bonded sulfuric acid ester salts, ester-bonded sulfonates, amide-bonded sulfonic acid salts, ether-bonded sulfonic acid salts, ether-bonded alkyl aryl sulfonic acid salts, ester-bonded alkyl aryl sulfonic acid salts and amide-bonded alkyl aryl sulfonic acid salts of polyethylene glycol ethers; acidic and alkaline metal salts and amine salts of phosphoric acid esters of mono- or di-esters or mixtures of orthophosphoric acid and oleyl alcohol or stearyl alcohol; silane coupling agents such as vinylethoxysilane, vinyl-tris(2-methoxy-ethoxy)silane, γ-methacryloxypropyltrimethoxysilane, γ-aminopropyltrimethoxysilane, β-(3,4-epoxycyclohexyl)ethyltrimethoxysilane, γ-glycidoxypropyltrimethoxysilane and γ-mercaptopropyltrimethoxysilane; titanate coupling agents such as isopropyltriisostearoyltitanate, isopropyltris(dioctylpirophosphate)titanate, isopropyltri(N-aminoethyl-aminoethyl) titanate and isopropyltridecylbenzenesulfonyltitanate; aluminum coupling agents such as acetoalkoxyaluminum diisopropyrate; esters of polyhydric alcohols and fatty acids such as glycerin monostearate and glycerine monooleate.

To effect a coating on the surfaces of the magnesium hydroxide particles with the above surface treating agent, a known wet or dry method can be used. For example, in a wet method, the surface treating agent in a liquid or emulsion form is added to the slurry of magnesium hydroxide and mechanically fully mixed at a temperature of up to about 100° C. In a dry method, the surface treating agent in a liquid, emulsion or solid form is added to magnesium hydroxide powders and mixed fully with a mixer such as a Henschel mixer thorough stirring with or without heating. The amount of the surface treating agent may be suitably selected but preferably about 10 % by weight or less based on the weight of the magnesium hydroxide particles.

Such means as water-washing, dehydration, granulation, drying, pulverization or classification are suitably selected and carried out on the thus surface-treated magnesium hydroxide particles as required to obtain a final product.

The magnesium hydroxide particles of the present invention are comprised in the resin in an amount of 15 to 80 % by weight, preferably 20 to 70 % by weight, based on the total of the particles and the resin.

As the synthetic resin to be compounded with the magnesium hydroxide particles of the present invention, any synthetic resin which is generally used as a molded article is acceptable. Illustrative examples of the thermoplastic resin include polyethylene, polypropylene, ethylene-propylene copolymer, polymers and copolymers of C₂ to C₈ olefins (α-olefin) such as polybutene or poly(4-methylpentene-1), copolymers of these olefins and diene, ethylene-acrylate copolymer, polystyrene, ABS resin, AAS resin, AS resin, MBS resin, ethylene-vinyl chloride copolymer resin, ethylene-vinyl acetate copolymer resin, ethylene-vinyl chloride-vinyl acetate graft polymer resin, vinylidene chloride, polyvinyl chloride, chlorinated polyethylene, chrolinated polypropylene, vinyl chloride-propylene copolymer, vinyl acetate resin, phenoxy resin, polyacetal, polyamide, polyimide, polycarbonate, polysulfone, polyphenylene oxide, polyphenylene sulfide, polyethylene terephthalate, polybutylene terephthalate or methacrylic resin.

Of the above thermoplastic resins, polyolefins and copolymers thereof which have excellent flame retardant and heat deterioration prevention effects and mechanical strength retaining properties due to the magnesium hydroxide particles, are preferred, as exemplified by polypropylene-based resins such as polypropylene homopolymers and ethylene-propylene copolymers; polyethylene-based resins such as high-density polyethylene, low-density polyethylene, straight-chain low-density polyethylene, ultra low-density polyethylene, EVA (ethylene-vinyl acetate resin), EEA (ethylene-ethyl acrylate resin), EMA (ethylene-methyl acrylate copolymer resin), EAA (ethylene-acrylic acid copolymer resin) and ultra high molecular weight polyethylene; and polymers and copolymers of C₂ to C₆ olefins (α-olefin) such as polybutene and poly(4-methylpentene-1).

Further, thermosetting resins such as epoxy resin, phenol resin, melamine resin, unsaturated polyester resin, alkyd resin and urea resin and synthetic rubbers such as EPDM, butyl rubber, isoprene rubber, SBR, NIR, urethanerubber, polybutadiene rubber, acrylic rubber, silicone rubber, fluorelastmer, NBR and chlorosulfonated polyethylene are also included.

The resin composition of the present invention essentially consists of (a) the above synthetic resin and (b) the magnesium hydroxide particles as described above. The resin composition may further contain a slight amount of an auxiliary flame retardant (c). By compounding this auxiliary flame retardant (c), the amount of the magnesium hydroxide particles (b) to be contained can be reduced and a flame retarding effect can be increased.

The auxiliary flame retardant (c) is preferably red phosphorus, carbon powder or a mixture thereof. As the red phosphorus may be used red phosphorus whose surface is coated with a thermosetting resin, polyolefin, carboxylic acid polymer, titanium oxide or titanium aluminum condensation product in addition to ordinary red phosphorus. The carbon powder is selected from carbon black, activated carbon and graphite, and the carbon black may be prepared by any of oil furnace, gas furnace, channel, thermal and acetylene methods.

When the auxiliary flame retardant (c) is compounded, the proportion thereof is 0.5 to 20 % by weight, preferably 1 to 15 % by weight based on the total weight of (a) the synthetic resin and (b) the magnesium hydroxide particles.

The resin composition of the present invention may be produced by mixing (a) the synthetic resin, (b) the magnesium hydroxide particles and as required,(c) the auxiliary flame retardant by known means in the respective proportions described above.

The resin composition having heat deterioration resistance and flame retardancy, provided by the present invention, may contain other commonly used additives in addition to the above components. The additives include an antioxidant, antistatic agent, pigment, foaming agent, plasticizer, filler, reinforcing agent, organic halogen flame retardant, crosslinking agent, optical stabilizer, ultraviolet absorber or lubricant.

The following examples are given to further illustrate the present invention. "%" means % by weight in the examples. The proportion of the comprised antioxidant is expressed in percentage (%) based on the total weight of (a) the synthetic resin, (b) the magnesium hydroxide particles and (c) the auxiliary flame retardant.

In the following examples, (i) the average secondary particle diameter and (ii) the BET specific surface area of the magnesium hydroxide particles are values measured in accordance with measurement methods described below.

### (1) Average secondary particle diameter of magnesium hydroxide secondary particles

This is determined by measuring with the MICROTRAC Particle Size Analyzer SPA Type (manufactured by LEEDS & NORTHRUP INSTRUMENTS, LTD.).

700 mg of sample powders are added to 70 ml of water and dispersed into the water by ultrasonic wave (Model US-300 manufactured by Nissei Co., Ltd., electric current: 300 pA) for 3 minutes. 2 to 4 ml of the resulting dispersion is sampled and added to the sample container of the particle size analyzer containing 250 ml of deaerated water. After the analyzer is activated to circulate the suspension for 8 minutes, the particle size distribution is measured. The measurement is made two times and an average value of the 50 % cumulative secondary particle diameters obtained by these measurements is calculated and taken as the average secondary particle diameter of the sample.

### (2) Specific surface area measured by BET method of magnesium hydroxide particles

This is measured by a liquid nitrogen adsorption method.

### (3) Izod impact strength

This is measured in accordance with JIS K 7110.

### (4) Tensile strength

This is measured in accordance with JIS K 7113.

### (5) Flame retardancy

This is measured in accordance with the UL 94VE method. Oxygen index is measured in accordance with JIS K7201.

### (6) Analysis of heavy metals

This is conducted in accordance with the ICP-MS (Inductively coupled plasma-mass spectrometry) or atomic absorption spectrometry.

### Example 1 (properties of magnesium hydroxide particles)

The average secondary particle diameter, specific surface area and heavy metal content of various kinds of magnesium hydroxide particles to be tested were measured and shown in Table 1 below. "%" means % by weight.

**Table 1**

| Composition and properties | Sample | | | | |
|---|---|---|---|---|---|
| | A-I | A-II | B-I | B-II | B-III |
| Average secondary particle diameter (µm) | 1.2 | 0.60 | 4.63 | 2.97 | 0.8 |
| Specific surface area (m²/g) | 10.8 | 6.5 | 3.9 | 10.9 | 5.4 |
| Mg(OH)₂ (%) | 99.19 | 99.60 | 93.80 | 90.80 | 99.40 |
| CaO (%) | 0.189 | 0.01 | 1.31 | 2.21 | 0.01 |
| CO₂ (%) | 0.31 | 0.15 | 4.15 | 6.0 | 0.29 |
| Fe (%) | 0.0069 | 0.0028 | 0.188 | 0.279 | 0.225 |
| Mn (%) | 0.0013 | 0.0001≧ | 0.025 | 0.027 | 0.024 |
| Cu (%) | 0.0011 | 0.0011 | 0.0068 | 0.0079 | 0.007 |
| V (%) | 0.0001≧ | 0.0001≧ | 0.0001≧ | 0.0001≧ | 0.0001≧ |
| Co (%) | 0.001≧ | 0.0001≧ | 0.0001≧ | 0.0001≧ | 0.0001≧ |
| Ni (%) | 0.0022 | 0.0009 | 0.0081 | 0.0098 | 0.008 |
| Cr (%) | 0.0001≧ | 0.0001≧ | 0.0005 | 0.0018 | 0.0003 |
| (Note) The composition of A-II is of the present invention, while the compositions of A-I, B-I, B-II and B-III are those for Comparative example. | | | | | |

### Example 2 (Evaluation of thermal stability and physical properties of resin composition)

The magnesium hydroxide particles shown in Table 1 of Example 1 were used to prepare test pieces having the following compositions.
60 % magnesium hydroxide particles (surface-treated with 3 % by weight of stearic acid)
40 % polypropylene (of an impact resistant grade with an MFI of 2 g/10 min.)
0.1 % antioxidant (Irganox 1010 of Chiba Geigy AG)
0.1 % antioxidant (DLTP of Yoshitomi Pharmaceutical Industries, Ltd.)

### (i) Preparation of test piece

Each sample of surface-treated magnesium hydroxide particles was dried at 105° C for 16 hours and further at 120° C for 2 hours to remove water adhered thereto, kneaded with a resin (polypropylene) and an antioxidant by a biaxial extruder (BT-30-S2-30-L manufactured by Plastic Kogaku Kenkyusho K.K.) at 230°C, dried again at 120°C for 2 hours and molded by an injection molding machine(FS 120S 18A SE manufactured by Nissei Jushi Kogyo K.K.) at 230°C.

Test pieces obtained by injection molding are designated as follows.
Test piece A-I: Compound of magnesium hydroxide particles of sample A-I
Tests piece A-II: Compound of magnesium hydroxide particles of sample A-II
Test piece B-I: Compound of magnesium hydroxide particles of sample B-I
Test piece B-II: Compound of magnesium hydroxide particles of sample B-II
Test piece B-III: Compound of magnesium hydroxide particles of sample B-III

### (ii) Measurement of thermal stability

Apparatus: GPHH-100 gear oven manufactured by Tabai Espec Co., Ltd. Measurement conditions: 150°C, damper aperture: 50%

A set of two test pieces is nipped at a top portion with a folded paper, fastened with a metal clip, hung on a rotary ring and taken out at intervals of a certain period of time test piece: (1/12 inch) 2.1167 mm

Evaluation: The time passed until whitening becomes observed in the test piece is taken as an index for heat deterioration. The time passed until the weight of the test piece is reduced by 10 % at 150°C is also checked.

### (iii) Evaluation result

Evaluation results are shown in Table 2 below

**Table 2**

| Test piece | A-I | A-II | B-I | B-II | B-III |
|---|---|---|---|---|---|
| Number of days passed before whitening | 13.5 | 27 | 6.0 | 3.5 | 4.0 |
| Izod impact (notched: kgfcm/cm) | 11 | 14.0 | 4.2 | 4.8 | 15.5 |
| Tensile strength (kgf/mm²) | 1.73 | 2.00 | 1.65 | 1.71 | 2.03 |
| 10wt% weight reduction (time) | 380 | 820 | 125 | 120 | 120 |
| Flame retardancy (UL 94VE 1/8inch) 3.175 mm | V-O | V-O | Outside standard | Outside standard | V-0 |

### Example 3

The same test as in Example 2 was made using various kinds of magnesium hydroxide particles which differ in average secondary particle diameter. The results are shown in Table 3 below. In Table 3, "total content of heavy metals (%)" indicates the total content of metals (Fe + Mn + Co + Cr + Cu + V + Ni).

**Table 3**

| Magnesium hydroxide particles | A-III | A-IV | A-V | B-IV | B-V |
|---|---|---|---|---|---|
| Average secondary particle diameter | 0.40 | 1.0 | 1.5 | 11.1 | 6.35 |
| Specific surface area | 18.0 | 8.0 | 11 | 16.0 | 59.0 |
| Content of magnesium hydroxide | 99.82 | 99.85 | 99.86 | 99.85 | 99.83 |
| Total content of heavy metals | 0.00505 | 0.00505 | 0.00570 | 0.01361 | 0.01065 |
| Number of days passed before whitening | 24 | 30 | 29 | 8.0 | 7.5 |
| Izod impact (notched: kgfcm/cm) | 10.8 | 13.6 | 10.7 | 3.7 | 3.9 |
| Tensile strength (kgf/mm²) | 1.90 | 1.95 | 1.88 | 1.61 | 1.50 |
| Flame retardancy (UL 94VE 1/8inch) 3.175 mm | V-0 | V-0 | V-0 | Outside standard | Outside standard |
| (Note) The composition of A-IV is of the present invention, while the compositions of A-III, A-V, B-IV and B-V are those for Comparative example. | | | | | |

### Example 4

A resin composition having the following composition was prepared.
100 parts by weight: ethylene-vinyl acetate copolymer (containing 41 % of vinyl acetate)
150 parts by weight: magnesium hydroxide particles (A-II or B-I, surface-treated with 0.25 part by weight of sodium oleate based on 100 parts by weight of the magnesium hydroxide.)
2 parts by weight: DCP (dicumyl peroxide)
1 part by weight: silane coupling agent (A-172 of Nippon Unicar Co., Ltd.)
1 part by weight: antioxidant (Irganox 1010 of Chiba Geigy AG)

### Preparation of test piece

The above starting materials were kneaded with a monoaxial kneading extruder at 120°C, pre-molded with a compression molding machine at 120°C for 5 minutes and crosslinked at 180°C for 15 minutes to obtain 2 mm- and 3 mm-thick plates.

### Measurement of thermal stability

Heat resistance: A 25 mm wide, 50 mm long test piece was obtained from the 2 mm-thick crosslinked plate and a heat resistance test was made on the test piece in the same manner as in Example 1.

Tensile strength: A JIS 7113 No. 2 test piece was obtained to measure its tensile strength at a test speed of 200 mm/min.

### Evaluation result

The results of the above measurements are shown in Table 4 below.

**Table 4**

| Magnesium hydroxide | A-II | B-I |
|---|---|---|
| Number of days passed before whitening | 30 | 6 |
| Tensile strength (kgf/mm²) | 1.33 | 0.89 |
| Flame retardancy (oxygen index) | 38 | 36 |

### Example 5

A resin composition having the following composition was prepared.
70 %: magnesium hydroxide particles (A-II or B-III; surface-treated with 3 % by weight of stearic acid)
30 %: polypropylene (of an impact resistant grade with an MFI of 2 g/10 min)
0.1 %: antioxidant (Irganox 1010 of Chiba Geigy AG)
0.1 %: antioxidant (DLTP of Yoshitomi Pharmaceutical Industries, Ltd.)

A test piece was prepared from the above resin composition in the same manner as in Example 2 to evaluate the thermal stability and flame retardancy. The results are shown in Table 5 below.

**Table 5**

| Magnesium hydroxides particles | A-II | B-III |
|---|---|---|
| Number of days passed before whitening | 22 | 3.0 |
| Izod impact (kgfcm/cm) | 6.6 | 6.3 |
| Tensile strength (kgf/mm²) | 1.75 | 1.72 |
| 10wt% weight reduction (time) | 650 | 85 |
| Flame retardancy (UL 94VE 1/16inch) 1.5875 mm | V-O | V-O |

### Example 6

A resin composition having the following composition was prepared.
30 %: magnesium hydroxide particles (A-II or B-III; surface-treated with 3 % by weight of stearic acid)
7 %: red phosphorus (Nova Excell 140 of Rin Kagaku Kogyo K.K.)
3 %: carbon black (manufactured by an oil furnace method, FEF)
60 %: polypropylene (of an impact resistant grade with an MFI of 2 g/10 min)
0.1 %: antioxidant (Irganox 1010 of Chiba Geigy AG)
0.1 %: antioxidant (DLTP of Yoshitomi Pharmaceutical Industries, Ltd.)

A test piece was prepared from the above resin composition in the same manner as in Example 2 to evaluate its thermal stability and flame retardancy. The results are shown in Table 6 below.

**Table 6**

| Magnesium hydroxide particles | A-II | B-III |
|---|---|---|
| Number of days passed before whitening | 33 | 7.0 |
| Izod impact (kgfcm/cm) | 12.5 | 11.8 |
| Tensile strength (kgf/mm²) | 2.17 | 2.13 |
| 10wt% weight reduction (time) | 950 | 135 |
| Flame retardancy UL 94VE 1/8inch 3.175 mm | V-O | V-O |

### Example 7

The following resin compositions (1) to (3) were produced and test pieces were prepared in the same manner as in Example 2 and tested for their flame retardancy. In the case of nylon 6, kneading and injection molding are performed at 250° C. The results show that all the test pieces had flame retardancy of V-0 in the UL94 VE (1/16-inch) 1.5875 mm test.
(1)
   65 %: magnesium hydroxide particles (A-II)
   35 %: nylon 6 (of an injection molded grade with a specific gravity of 1.14)
   0.2 %: antioxidant (Irganox 1098 of Chiba Geigy AG)
(2)
   68 %: magnesium hydroxide particles (A-II)
   32 %: high-density polyethylene (of an injection molded grade with an MFI of 5.0 g/10 min)
   0.1 %: antioxidant (Irganox 1010 of Chiba Geigy AG)
   0.1 %: antioxidant (DLTP of Yoshitomi Parmaceutical Industries, Ltd.)
(3)
   20 %: magnesium hydroxide particles (A-II)
   7 %: red phosphorus (Nova Excell 140 of Rin Kagaku Kogyo K.K.)
   5 %: carbon black (manufactured by an oil furnace method, FEF)
   63 %: ABS resin (of an impact resistant grade with an MFI of 25 g/10 min)
   5 %: nylon 6 (of an injection molded grade with a specific gravity of 1.14)
   0.2 %: antioxidant (Irganox 1010 of Chiba Geigy AG)

### Example 8

The following composition was prepared, masticated in an open roll at 70°C, and one day after, cured at 160°C for 30 minutes to obtain a (1/8-inch) 3.175 mm plate. A (1/8-inch) 3.175 mm thick test piece for the UL94 VE test was prepared from the thus obtained plate, and the UL 94 VE test was made on this test piece. The test result showed that the flame retardancy was V-1.

### Composition

100 parts by weight: EPDM rubber (ethylene/propylene ratio = 50/50 moles)
170 parts by weight: magnesium hydroxide particles (A-II)
3 parts by weight: dicumyl peroxide
0.5 part by weight: poly(2,2,4-trimethyl-1,2-dihydroquinoline)
1 part by weight: silane coupling agent (A-172 of Nippon Unicar Co., Ltd.)
1 part by weight: stearic acid
1 part by weight: sulfur

### Example 9

The following composition was prepared, kneaded with a kneader at about 30°C, and cured at 90°C for 15 minutes to obtain a (1/8-inch) 3.175 mm plate. A (1/8-inch) 3.175 mm test piece for the UL94 VE test was prepared from the thus obtained plate, and the UL 94 VE test was made on this test piece. The result showed that the flame retardancy was V-0.

### Composition

100 parts by weight: epoxy resin (specific gravity: 1.17)
100 parts by weight: magnesium hydroxide particles (A-II)
5 parts by weight: red phosphorus (Nova Excell 140 of Rin Kagaku Kogyo K.K.)
1 part by weight: carbon black (manufactured by oil furnace method, FEF)
10 part by weight: curing agent (HY951 of Chiba Geigy AG)
1 part by weight: stearic acid
0.2 part by weight: antioxidant (Irganox 1010 of Chiba Geigy AG)

According to the present invention, when a large amount of magnesium hydroxide particles are filled in a thermoplastic resin, there can be obtained a resin composition and a molded article which do not deteriorate by heat, have excellent dispersibility and are not whitened. Therefore, it is possible to provide a resin composition and a molded article which contain no halogenated flame retardant and have such advantages as excellent workability and no generation of a toxic gas when the molded article is burnt.

## Claims

1. A synthetic resin composition having heat deterioration resistance and flame retardancy, comprising:
(a) a synthetic resin; and
(b) magnesium hydroxide particles in a proportion of 15 to 80% by weight based on the total weight of (a) and (b),
wherein the magnesium hydroxide particles have
(i) an average secondary particle diameter, measured by a laser diffraction scattering method, of 0.4 to 1.0 µm, and
(ii) a specific surface area, measured by a BET method, of 1 to 10 m²/g,
wherein the total amount of iron compound, manganese compound, cobalt compound, chromium compound, copper compound, vanadium compound and nickel compound in the magnesium hydroxide particles is not more than 0.01 % by weight in terms of metals.

2. A composition according to any one of the preceding claims, wherein the magnesium hydroxide particles are contained in a proportion of 20 to 70% by weight based on the total weight of the synthetic resin and the magnesium hydroxide particles.

3. A composition according to any one of the preceding claims, wherein the synthetic resin is a polyolefin or a copolymer thereof.

4. A composition according to any one of the preceding claims, wherein the magnesium hydroxide particles have been surface-treated with at least one surface treating agent which is a higher fatty acid, anionic surfactant, phosphoric acid ester, coupling agent or ester of a polyhydric alcohol and a fatty acid.

5. A composition according to any one of the preceding claims, which further contains (c) an auxiliary flame retardant In a proportion of 0.5 to 20% by weight based on the total weight of (a) the synthetic resin and (b) the magnesium hydroxide particles.

6. A composition according to claim 5, wherein the auxiliary flame retardant is red phosphorus, carbon powder or a mixture thereof.

7. A molded article formed from a composition of any one of claims 1 to 6.

## Patentansprüche

1. Synthetische Harzzusammensetzung mit Wärmezerstörungsresistenz und Flammverzögerungsvermögen, umfassend:
(a) ein synthetisches Harz; und
(b) Magnesiumhydroxidteilchen in einem Anteil von 15 bis 80 Gew.-%, bezogen auf das Gesamtgewicht von (a) und (b),
wobei die Magnesiumhydroxidteilchen
(i) einen durchschnittlichen Sekundärteilchendurchmesser, gemessen mittels eines Laser-Diffraktions-Streu-Verfahrens, von 0,4 bis 1,0 µm haben, und
(ii) eine spezifische Oberfläche, gemessen mittels eines BET-Verfahrens, von 1 bis 10 m²/g haben,
wobei die Gesamtmenge von Eisenverbindung, Manganverbindung, Kobaltverbindung, Chromverbindung, Kupferverbindung, Vanadiumverbindung und Nickelverbindung in den Magnesiumhydroxidteilchen nicht mehr als 0,01 Gew.-% bezogen auf Metalle ist.

2. Zusammensetzung nach mindestens einem der vorhergehenden Ansprüche, wobei die Magnesiumhydroxidteilchen in einem Anteil von 20 bis 70 Gew.-%, bezogen auf das Gesamtgewicht von dem synthetischen Harz und den Magnesiumhydroxidteilchen, enthalten sind.

3. Zusammensetzung nach mindestens einem der vorhergehenden Ansprüche, wobei das synthetische Harz ein Polyolefin oder ein Copolymer ist.

4. Zusammensetzung nach mindestens einem der vorhergehenden Ansprüche, wobei die Magnesiumhydroxidteilchen mit mindestens einem Oberflächenbehandlungsmittel oberflächenbehandelt worden sind, welches ein(e) höhere Fettsäure, anionisches Surfaktant, Phosphorsäureester, Kupplungsmittel oder ein Ester eines mehrwertigen Alkohols und einer Fettsäure ist.

5. Zusammensetzung nach mindestens einem der vorhergehenden Ansprüche, welche ferner (c) ein zusätzliches Flammverzögerungsmittel in einem Anteil von 0,5 bis 20 Gew.-%, bezogen auf das Gesamtgewicht von (a) dem synthetischen Harz und (b) den Magnesiumhydroxidteilchen, enthält.

6. Zusammensetzung nach Anspruch 5, wobei das zusätzliche Flammverzögerungsmittel roter Phosphor, Kohlenstoffpulver oder eine Mischung davon ist.

7. Geformter Artikel, der aus einer Zusammensetzung von einem beliebigen der Ansprüche 1 bis 6 geformt ist.

## Revendications

1. Composition de résine synthétique ayant de la résistance à la détérioration par la chaleur et un caractère retardateur de flamme, comprenant :
(a) une résine synthétique ; et
(b) des particules d'hydroxyde de magnésium en une proportion de 15 à 80 % en poids par rapport au poids total de (a) et de (b),
dans laquelle les particules d'hydroxyde de magnésium ont
(i) un diamètre moyen de particule secondaire, mesuré par un procédé de dispersion par diffraction laser, de 0,4 à 1,0 µm, et
(ii) une surface spécifique, mesurée par un procédé BET, de 1 à 10 m²/g,
dans laquelle la quantité totale de composé de fer, de composé de manganèse, de composé de cobalt, de composé de chrome, de composé de cuivre, de composé de vanadium et de composé de nickel dans les particules d'hydroxyde de magnésium est non supérieure à 0,01 % en poids en termes de métaux.

2. Composition selon l'une quelconque des revendications précédentes, dans laquelle les particules d'hydroxyde de magnésium sont contenues en une proportion de 20 à 70 % en poids par rapport au poids total de la résine synthétique et des particules d'hydroxyde de magnésium.

3. Composition selon l'une quelconque des revendications précédentes, dans laquelle la résine synthétique est une polyoléfine ou un copolymère de celle-ci.

4. Composition selon l'une quelconque des revendications précédentes, dans laquelle les particules d'hydroxyde de magnésium ont été traitées en surface avec au moins un agent de traitement de surface qui est un acide gras supérieur, un agent tensioactif anionique, un ester de l'acide phosphorique, un agent de couplage ou un ester d'un polyalcool et d'un acide gras.

5. Composition selon l'une quelconque des revendications précédentes, qui contient en outre (c) un retardateur de flamme auxiliaire en une proportion de 0,5 à 20 % en poids par rapport au poids total de (a) la résine synthétique et (b) des particules d'hydroxyde de magnésium.

6. Composition selon la revendication 5, dans laquelle le retardateur de flamme auxiliaire est le phosphore rouge, une poudre de carbone ou un mélange de ceux-ci.

7. Article moulé formé à partir d'une composition selon l'une quelconque des revendications 1 à 6.
